# EUROPEAN PATENT APPLICATION

(11) **EP 1 380 970 A1**
(43) Date of publication of application: **14.01.2004**
(21) Application number: 02015488.6
(22) Date of filing: 12.07.2002
(51) Int. Cl.: G06F 17/50

(54) **Agent for identifying elements during computer supported design of combination of elements**

(71) Applicant: SAP Aktiengesellschaft, 69190 Walldorf (DE)
(72) Inventor: Hille, Anja, 67346 Speyer (DE); Szincsak, Peter, 68535 Edingen-Neckarhausen (DE); Lang, Peter, 76669 Bad Schönborn (DE)

(57) **Abstract**

A computer agent supports design by identifying a property providing component for a product - generally an element for a combination (320). The agent receives desired properties (W, A, D) of the product from a designer, determines an existing product with existing properties (w, A) that correlate to the desired properties in a predetermined quantity (such as 2 of 3), and presents the existing product (310) to the designer. Existing products are linked to a database to present pre-stored data or to identify design constraints.

## Description

### Field of the Invention

The present invention generally relates to data processing and, more particularly, relates to computer systems, computer programs, and methods that support a designer in developing a product or a procedure.

### Background of the Invention

While designing products (from stationary gadgets to industrial machines) and procedures (from weekend trips to sports championships), humans are supported by computers. The computer runs software known, for example, under the terms "Computer Aided Design (CAD) or "Product Lifecyle Management (PLM)". PLM tools are commercially available, for example, from SAP Aktiengesellschaft Walldorf (Baden, Germany).

The designer knows the plurality of desired properties of a product or of a procedure, and components (of products) or phases (of procedures) and their properties.

While designing, the designer combines components to the product or sequences phases to the procedure.

There is however a problem: The high numbers of components, phases and properties multiply to a still higher number of potential combinations or sequences. Further, the designer needs to consider business data, but such data is spread over a variety of sources like databases. There is a need to provide improved tools to support the designer.

### Brief Description of the Drawings

- FIG. 1: illustrates a simplified block diagram of a computer system;
- FIG. 2: illustrates a static classification of products and procedures;
- FIG. 3: illustrates a dynamic classification with existing, designed and alternative products and procedures;
- FIG. 4: illustrates a simplified overview of a computer for using the present invention, wherein the computer is operated by a designer;
- FIG. 5: illustrates an exemplary scenario using the invention from the view-point of the designer;
- FIG. 6: illustrates a simplified flow chart diagram of a method of the present invention;
- FIG. 7: illustrates a property-to-product assignment table;
- FIG. 8: illustrates a property table at a first time point;
- FIG. 9: illustrates a property table at a second time point;
- FIG. 10: illustrates a screen presentation with a table pre-selection; and
- FIG. 11: illustrates linking products to a business database with pre-stored data.

### Detailed Description

The present invention provides a computer-run agent that supports the design of products and procedures, or - generally - the design of combinations. The agent analyses desired properties of a combination under design and identifies similarities to existing combinations by comparing desired properties with properties of existing combinations, thus allowing to systematically re-use existing design.

The designer is alleviated from manually parsing through a larger number of combinations. Designing is made faster and more efficiently. In other words, re-using existing know-how and experience is supported.

While the agent can be described in terms of method, computer system, and computer program, the following summary focuses on the method. Persons of skill in the art can adapt the method step to systems and programs without the need of further explanation.

A method for identifying a property providing element for a combination of elements comprises steps receiving, determining and presenting.

A computer (a) receives desired properties, (b) determines an existing combination with existing properties that correlate to the desired properties in a predetermined quantity, and (c) presents the existing combination to the designer.

The following optional features all refer to preferred implementations.

Preferably, step receiving comprises to receive a selection of properties from the designer. Preferably, the properties are received as functional properties. Preferably, step receiving is performed as receiving a first set of representations and step determining is performed as determining a second set of representations. The representations are technical representations.

Preferably, step receiving uses a table pre-selection for subsequently performing step determining. Preferably, the table pre-selection is received from a plurality of combination groups.

Preferably, step determining comprises to determine a further existing combination with existing properties that correlate to the desired properties in a predetermined further quantity, and step presenting is performed as presenting the existing combination together with the further existing combination. Preferably, step determining comprises to identify intersection sets of properties.

Preferably, step determining comprises to count the number of properties that match in both the existing properties and the desired properties. Preferably, step determining comprises to identify matching sub-sets of existing and desired properties. Preferably, step determining comprises to evaluate numerical values calculated from numerical properties in both the first set and the second set. Preferably, step determining comprises to look up in a predefined property-to-combination assignment table (cf. property-to-product).

Preferably, step determining comprises to look up in a database of costs, manufacturing information, catalogs of vendors, statistical data, reliability information, advertisement, and business partners.

Preferably, determining further comprises identifying constraints (limitations, exceptions) that are, for example, sum cost of elements, overall physical size of desired combination, classification in a catalogue, time to manufacture, or time to schedule. Preferably, the constraints are stored in a business database. Preferably, the computer presents existing combinations sorted by correlation quantity.

Preferably, the computer also presents pre-stored data identified by the existing combination from a business database. Pre-stored data is data such as costs for existing combinations, manufacturing time, statistical data about customers, statistical data about usage limitations, and previous sales data (or any data mentioned above in connection with constraints).

In an embodiment using server/client architecture, receiving and determining steps are performed on a server computer, and a client computer displays the presentations by an Internet browser.

Preferably, the method has further step updating an assignment table with a combination that has been designed.

The elements form combinations that are products. In the alternative, the elements are phases forming combinations that are procedures.

Preferably, executing the steps is initiated upon starting a computer aided design application.

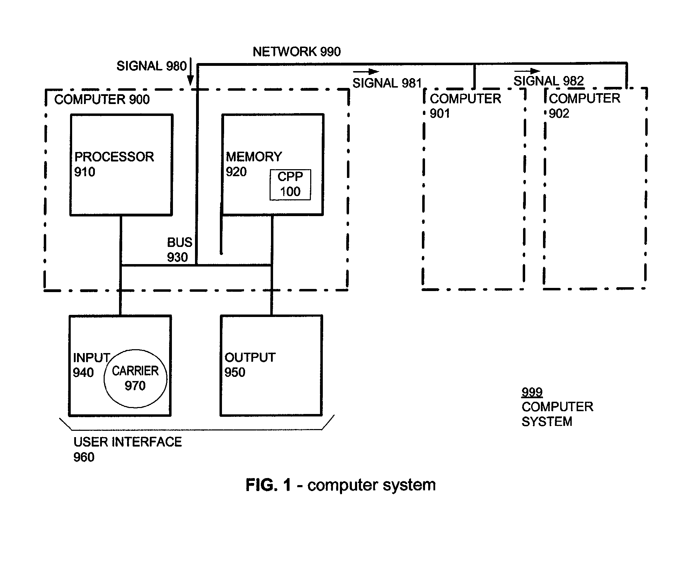

FIG. 1 illustrates a simplified block diagram of computer network system 999 having a plurality of computers 900, 901, 902 coupled via inter-computer network 990. Computer 900 comprises processor 910, memory 920, bus 930, and, optionally, input device 940 and output device 950 (I/O devices, user interface 960). As illustrated, the invention is present by computer program product 100 (CPP), program carrier 970 and program signal 980, collectively "program". More details for the computer system are provided prior to the claims.

The following description uses words in CAPITAL letters to indicate exemplary properties (e.g., functions WRITE, ADVERTISE, DELETE) and uses exemplary components or products (e.g., PENCIL, ADVERTISE-AREA, ERASER). For convenience, properties WRITE, ADVERTISE and DELETE are sometimes abbreviated as W, A and D, respectively. Property sets are indicated in parenthesis, for example, set (W, A, D). The word "PATENT" is just a non-limiting example for visually advertising. Although the following explanation mainly refers to products and their components, the principles of the present inventions are analogously applicable for designing procedures and their phases, respectively.

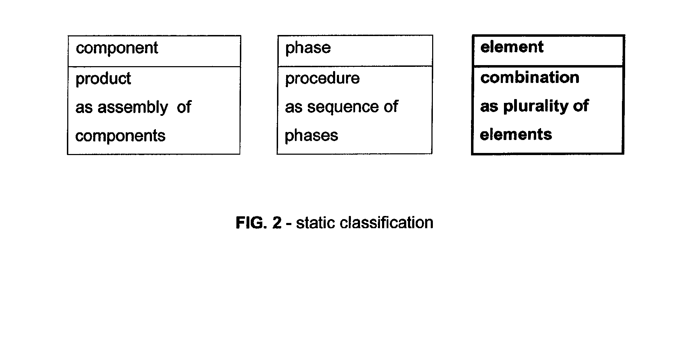

FIG. 2 illustrates a static classification with example products and procedures.

A component is an article having one or more functional properties. For example, an ERASER mainly serves to delete text from paper, and - if large enough - also serves for advertising.

A product is an article with at least one component and with two or more (i.e. multiple) functional properties. For example, a PENCIL has a lead and wood to WRITE and has space on the wood to ADVERTISE. Adding one component to a product adds a functional property. Removing one component from a product removes a functional property. A procedure is a sequence of predefined phases (or "events"). For example, the procedure TRIP has the phases ARRIVING, STAYING IN HOTEL, ATTENDING CONFERENCE, and DEPARTING.

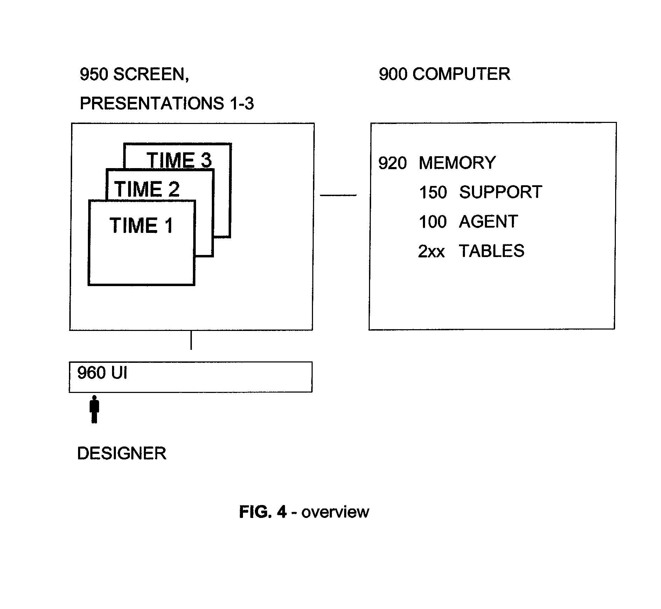

In terms of hierarchy, components are subordinated to products; phases are subordinated to procedures. The static classification is applicable before and after designing. Components, products, procedures and phases are technically represented by in computer memory, for example in tables (cf. FIG. 4).

As indicated on the right by bold boxes, "element" is the common term for "component" and "phase", and "combination" is the common term for "product" and "procedure". The terms "assembly" and "sequence" both indicate a plurality.

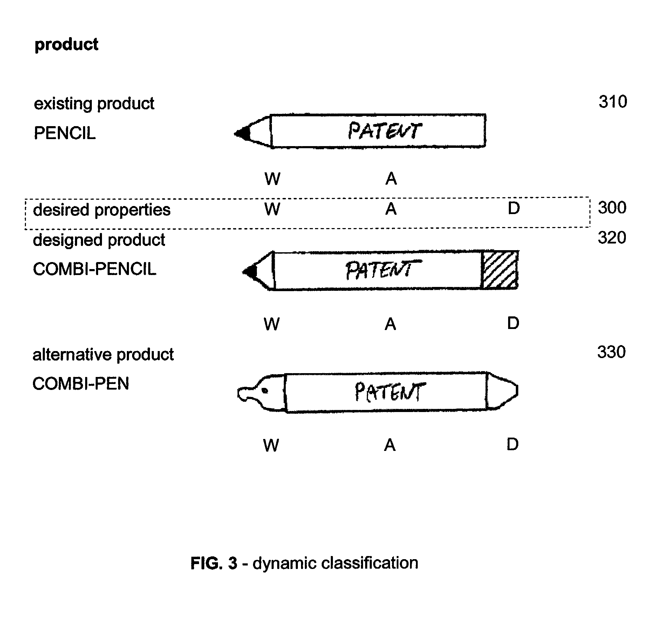

FIG. 3 illustrates a dynamic classification with existing, designed and alternative products. Uppercase letters A, W, D stand for exemplary properties.

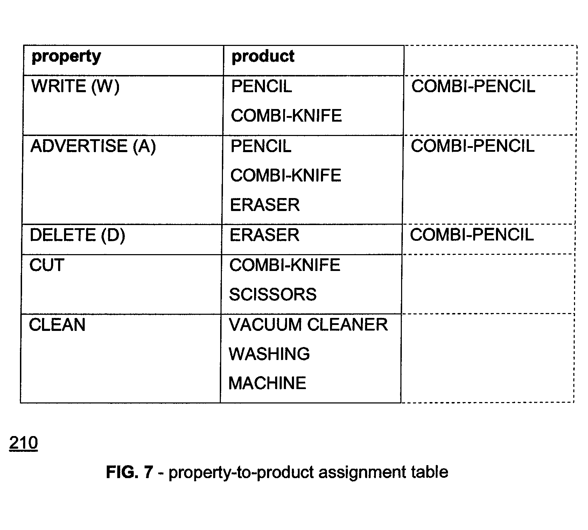

An existing product is a product having a technical representation in a property-to-product assignment table (e.g., the letters W and A and PENCIL 310 in FIG. 3; also FIG. 7) and - optionally - by a picture. Example product 310 is a PENCIL with ADVERTISING area. The table represents properties, for example W and A. There is no need to identify the components that provide the property.

Prior to designing, the designer identifies desired properties for example W, A and D (dashed frame). During designing, at least one component is identified that - when added - enables the existing product to turn into the product with the desired properties.

A designed product is a product that is represented upon design completion by a further entry in the property-to-product assignment table and - optionally - by an enhanced picture. The designed product has the desired properties (e.g., WRITE W, ADVERTISE A, DELETE D), for example, product 320: COMBI-PENCIL 320 being PENCIL 310 with additional ERASER).

An alternative product is a product with at least the same desired properties as the designed product (e.g., W, A, D) but with differently implemented components, for example, product 330: FOUNTAIN PEN with ADVERTISE-AREA and CORRECTION INK DISPENSER.

These definitions apply likewise for existing procedure, designed procedure, and alternative procedure. Dynamically classified, there are: existing procedures, designed procedures, alternative procedures. In general, there are: existing combinations, designed combinations and alternative combinations.

FIG. 4 illustrates a simplified overview of design computer 900 for using the present invention. The computer user (hereinafter "designer") interacts with computer 900 via screen 950 and user interface 960 (cf.

FIG. 1). Computer 900 (memory 920) runs design supporting program 150 ("SUPPORT"), and agent program 100 ("AGENT", i.e. CPP) of the present invention. Both program 150 and agent 100 access tables 2xx. Screen 950 shows a sequence of presentations 1 to 3 at consecutive time points TIME 1 to TIME 3.

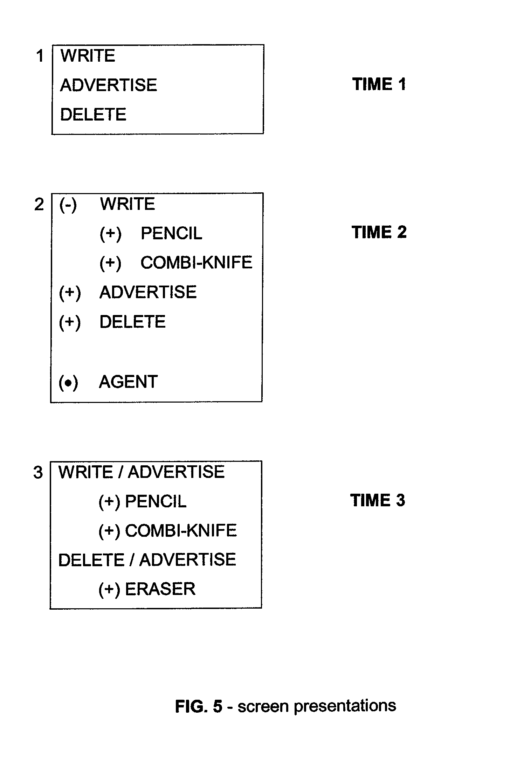

FIG. 5 illustrates an exemplary scenario using the invention from the view-point of the designer by presentations 1, 2 and 3 (at TIME 1, TIME 2 and TIME 3, respectively). In the example, the symbol (+) stand for an expandable node and the symbol (-) stands for a node that has been expanded.

As presentation 1, the designer starts to design the product at TIME 1 by selecting its desired properties. The product should have the following functional properties:
- WRITE W (i.e. write text to paper),
- ADVERTISE A (i.e., visually advertise), and
- DELETE D (i.e., remove text from paper)

Further details are so far unknown to the designer. For convenience, presentation 1 displays the selected functions by the words WRITE, ADVERTISE and DELETE.

As in presentation 2, the designer navigates through a tree with nodes for the selected functional properties W, A and D. When the designer selects a node (e.g., WRITE), the computer displays existing products that have this property. For example, the node WRITE would show the following products:
- PENCIL (cf. 310 in FIG. 3),
- COMBI-KNIFE (i.e. general-purpose knife with a write-tool)

When operating computer 900 with support program 150 alone, the designer would have to navigate through substantially all nodes and to manually select products or components that fits to most or all of the properties. For example, the designer would further open the node ADVERTISE to see PENCIL and COMBI-KNIFE, open the node DELETE to see ERASER.

According to the invention, agent 100 - in the exemplary embodiment - supports the designer by presenting existing products that match most of the desired properties. In the example, the designer is invited to start agent 100 by radio button AGENT.

Optionally, the designer can further expand the component nodes, for example, to see a picture of PENCIL (cf. FIG. 3).

As in presentation 3, agent 100 at TIME 3 indicates the following:
- Functional properties W and A can be implemented by existing products PENCIL and COMBI-KNIFE.
- Functional properties D and A can be implemented by the existing product ERASER.

The components are also illustrated in nodes (+) for further expansion.

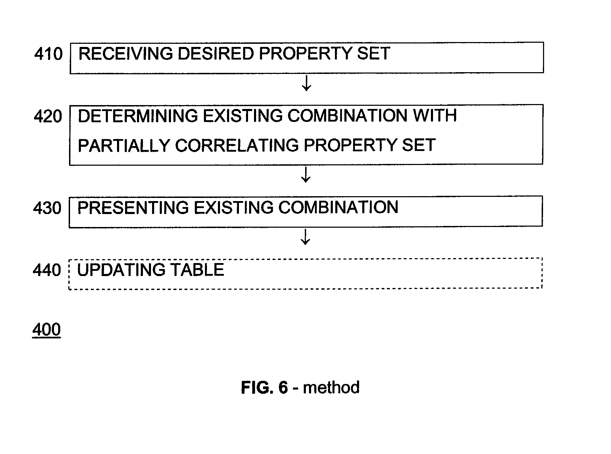

FIG. 6 illustrates a simplified flow chart diagram of method 400 of the present invention. Referring to elements as components forming combinations that are products (i.e. assembly of components) and phases forming combinations that are procedures (i.e. sequences of phases), method 400 is summarized as method for identifying a property providing element for a combination of elements (cf. 320 in FIG. 3).

In step receiving 410, desired properties (e.g., W, A, D) are received.

In step determining 420, an existing combination (e.g., PENCIL) is determined; the existing combination has existing properties (e.g., W, A) that correlate to the desired properties in a predetermined quantity.

In step presenting 430, the existing combination (one or more, e.g., PENCIL/COMBI-KNIFE) is presented to a designer.

The following method details are all optionally provided in preferred embodiments:

In step receiving 410, a selection of properties is received from the designer (e.g., via user interface, menus). The properties are received as functional properties. In step receiving 410, a first set of representations (e.g., set (W, A, D)) is received, and in step determining 420 a second set of representations (e.g., set (W, A)) is determined.

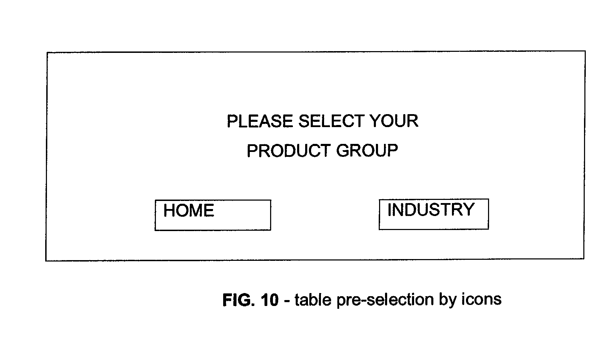

In step receiving 410, a table pre-selection for performing the step determining 420 is received from combination groups (cf. FIG. 10).

In step determining 420, a further existing combination (e.g. ERASER) is determined that has existing properties (e.g., set (D, A)) correlating to the desired properties in a predetermined further quantity (e.g., only 1 of 3 properties match). In step presenting 430, this further existing combination (e.g., ERASER) is presented as well (cf. FIG 5, presentation 3).

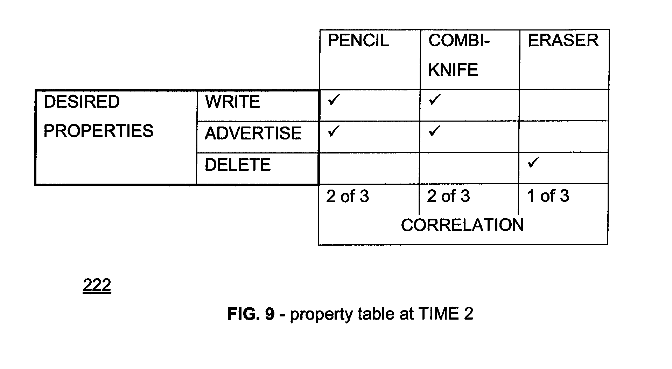

In step determining 420, intersection sets of properties are identified (e.g. set (W, A) intersecting set (W, A, D)). In step determining 420, the number of properties that match in both the existing properties and the desired properties is counted. Taking products as example, cf. FIG. 9, the 2 properties W and A in the property set for PENCIL match the 3 desired properties W, A and D. Taking procedures as example, the 2 phases STAYING IN HOTEL and ATTENDING CONFERENCE partially match into a larger sequence of a desired extended TRIP with further events scheduled prior to DEPARTING. In other words, in step determining 420, matching sub-sets of existing and desired properties are identified.

Step determining 420 optionally comprises to evaluate numerical values calculated from numerical properties in both the first set and the second set. For example, the procedure under design involves drafting a number of patent applications each having expected attorney fees as numerical values first set . During evaluation, a set of existing patent applications is identified each having real attorney fees as numerical values.

Step determining 420 optionally has a feature to identify constraints (limitations, exceptions), such as sum cost of elements (e.g., stay below a given limit; introduce the cost as property), overall physical size of desired combination, classification in a catalogue (e.g., for security reasons do not distribute COMBI-KNIFE with additional ERASER to school children; do not allow 5 star hotels, set a property to 3-4 stars), consider time to manufacture (e.g., taking account the time to legal clearance before advertisement, time to schedule a procedure, scheduling a next-week-end might have travel limitations, time to schedule drafting patent applications). The constraints are stored in the business database, and the constraints are taken into account as properties.

Step presenting 430 comprises to present existing combinations sorted by correlation quantity. For example as in presentation 3, presenting PENCIL and COMBI-KNIFE with 2 matching properties at the top; presenting ERASER with 1 matching property below. This makes it easier for the designer to identify the ERASER as a property providing component i.e., the component that converts to WA-PENCIL to a WAD-PENCIL.

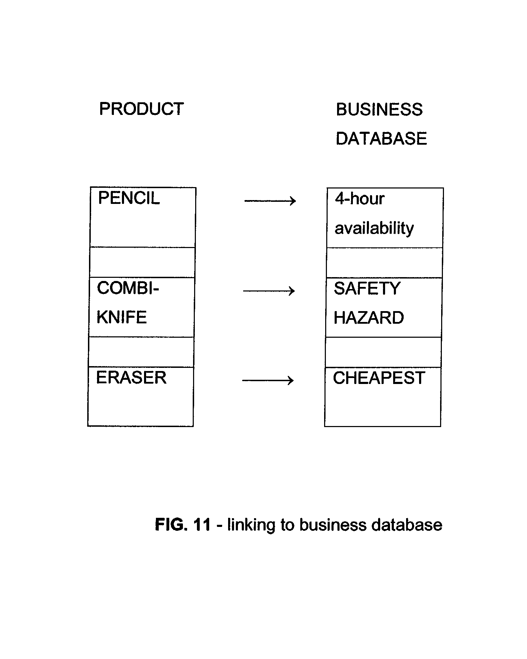

Step presenting 430 comprises to present pre-stored data identified by the existing combination from a business database (looking up). The pre-stored data in the business database comprises data such as costs for existing combinations; manufacturing time; statistical data about customers; statistical data about usage limitations; previous sales data; costs; manufacturing information; catalogs of vendors; statistical data; reliability information; advertisement; business partners (for details, cf. FIG. 11) or any other information previously identified as a constraint. Presenting pre-stored data is similar to identifying constraints (in determining). For both features (identifying constraints, and presenting pre-stored data), the database can be the same.

In optionally step updating 440, a property-to-product assignment table is updated with a product that has been designed (updating by COMBI-PENCIL, cf. FIG. 7, dashed box). Generally, a property-to-combination assignment table is updated.

Optionally, executing the steps is initiated upon starting a computer aided design application.

The following explanation returns to the above example and continues from the view-point of tables 2xx (cf. FIG. 4). Tables 2xx are conveniently illustrated using the above easy-to-understand CAPITAL words for properties, components and so on. As persons of skill in the art understand, tables 2xx store technical representations of these properties, components and so on. These representations are, for example, bit patterns, strings, characters etc. Preferably, tables 2xx remain hidden from the designer.

FIG. 7 illustrates property-to-product assignment table 210 that is predefined prior to performing method 400. Table 210 indicates functional properties (left col.) and the corresponding existing products that support the properties (center col.). For example, the property WRITE belongs to PENCIL and to COMBI-KNIFE, the property ADVERTISE belongs to PENCIL, COMBI-KNIFE and to ERASER (being a single component product) and so on.

Indicated by a dashed column on the right is the COMBI-PENCIL as the designed product (320) added to table 210 during updating (cf. FIG. 6, step 440).

Persons of skill in the art can likewise provide a property-to-procedure assignment table. Generally, table 210 is a property-to-combination table. Table 210 is conveniently a table in an existing database of support program 150.

As in the example, the assignments are made for products and procedures; assignments to components and phases are also useful. Persons of skill in that are able to optimize the most suitable assignment.

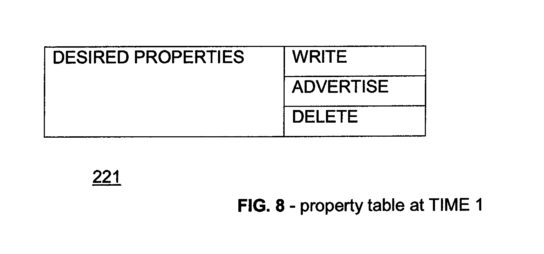

FIG. 8 illustrates property table 221 at a first time point. Initially, table 221 indicates a desired property set (W, A, D). Table 221 is provided as the result of receiving properties (cf. FIG. 6, step 410). Table 221 serves as a base for presentation 2 at TIME 2.

FIG. 9 illustrates property table 222 at a second time point, more accurate the time after the designer has started agent 100 (cf. radio button in presentation 2). Table 222 becomes a temporary extension of table 221 (illustrated by bold frame) to perform step determining 420.

In the example, there are several sets of properties that correlate to the desired property set (W, A, D) in different quantities of property matching.

The set (W, A) (cf. check-marks for PENCIL and COMBI-KNIFE) correlates to the desired property set (W, A, D) by matching 2 of 3 properties

The set (D) (cf. check-mark for ERASER) correlates to the desired property set (W, A, D) by only matching a single property.

The predefined quantity is defined as "highest number of matching properties". The second (i.e. most matching) set of properties that correlates to the first (i.e. desired) set in the predetermined quantity is therefore identified as set (W, A). The corresponding existing products are PENCIL/COMBI-KNIFE.

During presenting 430 (presentation 3, cf. TIME 3), PENCIL/COMBI-KNIFE are indicated to the designer. Optionally, the ERASER is indicated for the property D.

Presentation 3 does effectively support the designer by indicating most matching property set (W, A) together with PENCIL/COMBI-KNIFE. The Presentation hides properties that are not relevant here (e.g., CUT function for COMBI-KNIFE).

The designer now uses support program 100 in well-known fashion to design COMBI-PENCIL (cf. designed product 320).

The following embodiments are also optional. Those of skill in the art can implement them without the need of explaining further details.

Collaboration: The designer cooperates with further persons using computer 900 or other computers in network 999 (cf. FIG. 1). For example, components are associated with certain persons (or roles for persons).

The presentations to the designer could be based on iPPE solutions (integrated product and process engineering). Such solutions are commercially available from SAP Aktiengesellschaft with presentations of (a) feature and requirement structure, (b) functional structure, (c) concept and design structure, and (d) product structure.

The presentation could visually show products/components, procedures/phases by pictures (stand-still, animated, video etc.). Audio support is optionally.

The tables are linked to a business database (internal or external to computer 900, cf. FIG. 11) so that business information is displayed on request. Using business information as property is also possible, for example, in the following cases:
- Costs are limited (e.g., PENCIL cheaper than COMBI-KNIFE).
- Manufacturing designed products is possible in predetermined time periods (e.g., manufacturing PENCIL faster than manufacturing COMBI-KNIFE, advantage to quickly start advertising campaigns).
- The tables are linked to catalogs of vendors (e.g., stationary suppliers, designer selects PENCIL), thus allowing business-to-business ("B2B") integration.
- The previous use of existing combination can be quantified as statistical data (e.g., by a percentage of customers).
- Some combinations are excluded from certain markets (e.g., knifes are a potential safety hazard and should not be distributed to children).
- A certain combination is either reliable or not, available or not.
- Figures for previous sales are known.
- Advertisement campaign data (e.g., this product turned out to be a success or failure).
- Certain business partners are identified as preferred partners.

FIG. 10 illustrates a screen presentation with a table pre-selection. With the advantage of limiting table content and speeding up determining, the designer selects a table belonging to a plurality of combination groups (e.g., product groups "Home" and "Industry").

Preferably, pre-selecting the table is performed prior to receiving properties. Preferably, step receiving uses a table pre-selection for subsequently performing step determining. Preferably, the table pre-selection is received from a plurality of combination groups. The figure indicates the groups by representative keywords (HOME, INDUSTRY) in selection icons. By activating one of the icons, the designer selects a table, such as HOME (with table 210 of FIG. 7). The designer could have selected INDUSTRY as well (to access a different table with W and A properties for industry products like printing machines).

FIG. 11 illustrates linking products (or generally combinations) to a business database with pre-stored data. Symbolized by arrows to the right, products are assigned to entries in a business database. For convenience of explanation, exemplary entries are given for PENCIL (e.g., in a catalogue "4-hour availability"), COMBI-KNIFE (e.g., "Safety Hazard") and ERASER ("cheapest"). The designer is supported in decision-making. Additionally to existing combinations and their properties (cf. step 430), the designer is further supported by further information that is not directly related to the properties. Such business information is however often useful in finding the right design. A similar approach (linking to procedures) leads to similar advantages.

The following refers to implementations of agent 100 on computers. Agent 100 is triggered automatically or manually (by designer). Agent 100 and program 150 can be operated independently in a multi-tasking operation system; in other words agent 100 could operate in the background of an application. Agent 100 can communicate with screen 950 by Internet technologies. For example, agent 100 provides presentations in the form of documents in markup languages (e.g., HTML or XML pages) to be interpreted by a commercially available browser. Design computer 900 and the computer with screen and browser can physically be different.

Agent 100 provides statistical information and triggers predetermined actions upon reaching predetermined thresholds. For example, the designer designs the products (W, A, D) for a certain customer. Tables 2xx receive data from a customer relation management (CRM) system. When the designer decides in favor of PENCIL then agent 100 indicates the advice that the customer has received PENCIL advertising 3 times and its now time to change to something else. The designer might consider this advice and design a CASE with ADVERTISE-AREA and with holders for PENCIL and for ERASER.

### Description of a Computer System

FIG. 1 illustrates a simplified block diagram of computer network system 999 having a plurality of computers 900, 901, 902 (or 90q, with q=0...Q-1, Q any number).

Computers 900-902 are coupled via inter-computer network 990. Computer 900 comprises processor 910, memory 920, bus 930, and, optionally, input device 940 and output device 950 (I/O devices, user interface 960). As illustrated, the invention is present by computer program product 100 (CPP), program carrier 970 and program signal 980, collectively "program".

In respect to computer 900, computer 901/902 is sometimes referred to as "remote computer", computer 901/902 is, for example, a server, a router, a peer device or other common network node, and typically comprises many or all of the elements described relative to computer 900. Hence, elements 100 and 910-980 in computer 900 collectively illustrate also corresponding elements 10q and 91q-98q (shown for q=0) in computers 90q.

Computer 900 is, for example, a conventional personal computer (PC), a desktop and hand-held device, a multiprocessor computer, a pen computer, a microprocessor-based or programmable consumer electronics, a minicomputer, a mainframe computer, a personal mobile computing device, a mobile phone, a portable or stationary personal computer, a palmtop computer or the like.

Processor 910 is, for example, a central processing unit (CPU), a micro-controller unit (MCU), digital signal processor (DSP), or the like.

Memory 920 symbolizes elements that temporarily or permanently store data and instructions. Although memory 920 is conveniently illustrated as part of computer 900, memory function can also be implemented in network 990, in computers 901/902 and in processor 910 itself (e.g., cache, register), or elsewhere. Memory 920 can be a read only memory (ROM), a random access memory (RAM), or a memory with other access options. Memory 920 is physically implemented by computer-readable media, such as, for example: (a) magnetic media, like a hard disk, a floppy disk, or other magnetic disk, a tape, a cassette tape; (b) optical media, like optical disk (CD-ROM, digital versatile disk - DVD); (c) semiconductor media, like DRAM, SRAM, EPROM, EEPROM, memory stick, or by any other media, like paper.

Optionally, memory 920 is distributed across different media. Portions of memory 920 can be removable or non-removable. For reading from media and for writing in media, computer 900 uses devices well known in the art such as, for example, disk drives, tape drives.

Memory 920 stores support modules such as, for example, a basic input output system (BIOS), an operating system (OS), a program library, a compiler, an interpreter, and a text- processing tool. Support modules are commercially available and can be installed on computer 900 by those of skill in the art. For simplicity, these modules are not illustrated.

CPP 100 comprises program instructions and - optionally - data that cause processor 910 to execute method steps of the present invention. Method steps are explained with more detail below. In other words, CPP 100 defines the operation of computer 900 and its interaction in network system 999. For example and without the intention to be limiting, CPP 100 can be available as source code in any programming language, and as object code ("binary code") in a compiled form. Persons of skill in the art can use CPP 100 in connection with any of the above support modules (e.g., compiler, interpreter, operating system).

Although CPP 100 is illustrated as being stored in memory 920, CPP 100 can be located elsewhere. CPP 100 can also be embodied in carrier 970.

Carrier 970 is illustrated outside computer 900. For communicating CPP 100 to computer 900, carrier 970 is conveniently inserted into input device 940. Carrier 970 is implemented as any computer readable medium, such as a medium largely explained above (cf. memory 920). Generally, carrier 970 is an article of manufacture comprising a computer readable medium having computer readable program code means embodied therein for executing the method of the present invention. Further, program signal 980 can also embody computer program 100. Signal 980 travels on network 990 to computer 900.

Having described CPP 100, program carrier 970, and program signal 980 in connection with computer 900 is convenient. Optionally, program carrier 971/972 (not shown) and program signal 981/982 embody computer program product (CPP) 101/102 to be executed by processor 911/912 (not shown) in computers 901/902, respectively.

Input device 940 symbolizes a device that provides data and instructions for processing by computer 900. For example, device 940 is a keyboard, a pointing device (e.g., mouse, trackball, cursor direction keys), microphone, joystick, game pad, scanner, disc drive. Although the examples are devices with human interaction, device 940 can also operate without human interaction, such as, a wireless receiver (e.g., with satellite dish or terrestrial antenna), a sensor (e.g., a thermometer), a counter (e.g., goods counter in a factory). Input device 940 can serve to read carrier 970.

Output device 950 symbolizes a device that presents instructions and data that have been processed. For example, a monitor or a display, (cathode ray tube (CRT), flat panel display, liquid crystal display (LCD), speaker, printer, plotter, vibration alert device. Similar as above, output device 950 communicates with the user, but it can also communicate with further computers.

Input device 940 and output device 950 can be combined to a single device; any device 940 and 950 can be provided optional.

Bus 930 and network 990 provide logical and physical connections by conveying instruction and data signals. While connections inside computer 900 are conveniently referred to as "bus 930", connections between computers 900-902 are referred to as "network 990". Optionally, network 990 comprises gateways being computers that specialize in data transmission and protocol conversion.

Devices 940 and 950 are coupled to computer 900 by bus 930 (as illustrated) or by network 990 (optional). While the signals inside computer 900 are mostly electrical signals, the signals in network are electrical, magnetic, optical or wireless (radio) signals.

Networking environments (as network 990) are commonplace in offices, enterprise-wide computer networks, intranets and the Internet (i.e. world wide web). The physical distance between a remote computer and computer 900 is not important. Network 990 can be a wired or a wireless network. To name a few network implementations, network 990 is, for example, a local area network (LAN), a wide area network (WAN), a public switched telephone network (PSTN); a Integrated Services Digital Network (ISDN), an infra-red (IR) link, a radio link, like Universal Mobile Telecommunications System (UMTS), Global System for Mobile Communication (GSM), Code Division Multiple Access (CDMA), or satellite link.

Transmission protocols and data formats are known, for example, as transmission control protocol/internet protocol (TCP/IP), hyper text transfer protocol (HTTP), secure HTTP, wireless application protocol, unique resource locator (URL), a unique resource identifier (URI), hyper text markup language HTML, extensible markup language (XML), extensible hyper text markup language (XHTML), wireless application markup language (WML), Standard Generalized Markup Language (SGML) etc.

Interfaces coupled between the elements are also well known in the art. For simplicity, interfaces are not illustrated. An interface can be, for example, a serial port interface, a parallel port interface, a game port, a universal serial bus (USB) interface, an internal or external modem, a video adapter, or a sound card.

Computer and program are closely related. As used hereinafter, phrases, such as "the computer provides" and "the program provides", are convenient abbreviation to express actions by a computer that is controlled by a program.

### References

- 1, 2,: presentation
- 3, 4 100: agent
- 150: support program
- 2xx: tables
- 3xx: products
- 4xx: method, steps
- 900: computer
- 910: processor
- 920: memory
- 930: bus
- 940: input device
- 950: output device
- 960: user interface
- 970: program carrier
- 980: program signal
- 999: computer network system

## Claims

1. Method (400) for identifying a property providing element for a combination (320) of elements, the method comprising:
receiving (410) desired properties;
determining (420) an existing combination with existing properties that correlate to the desired properties in a predetermined quantity; and
presenting (430) the existing combination to a designer.

2. The method of claim 1, wherein step receiving (410) comprises to receive a selection of properties from the designer.

3. The method of claim 1, wherein in step receiving (410), the properties are received as functional properties.

4. The method of claim 1, wherein step receiving (410) desired properties is performed as receiving a first set of representations, and wherein step determining (420) is performed as determining a second set of representations.

5. The method of claim 1, wherein step receiving (410) comprises to receive a table pre-selection for performing the step determining (420).

6. The method of claim 5, wherein in step receiving (410), the table pre-selection is received from a plurality of combination groups.

7. The method of claim 1, wherein step determining (420) comprises to determine a further existing combination with existing properties that correlate to the desired properties in a predetermined further quantity, and wherein step presenting (430) is performed as presenting the existing combination together with the further existing combination.

8. The method of claim 1, wherein the step determining (420) comprises to identify intersection sets of properties.

9. The method of claim 1, wherein step determining (420) comprises to count the number of properties that match in both the existing properties and the desired properties.

10. The method of claim 1, wherein step determining (420) comprises to identify matching sub-sets of existing and desired properties.

11. The method of claim 1, wherein step determining (420) comprises to evaluate numerical values calculated from numerical properties in both the first set and the second set.

12. The method of claim 1, wherein the step determining (420) comprises to look up in a predefined property-to-combination table (210).

13. The method of claim 1, wherein the step determining (420) comprises to look up in a database selected from the group of costs, manufacturing information, catalogs of vendors, statistical data, reliability information, advertisement, business partners.

14. The method of claim 1, wherein step determining (420) further comprises identifying constraints.

15. The method of claim 14, wherein the constraints are selected from the group of sum cost of elements, overall size of desired combination, classification in a catalogue, and time to manufacture.

16. The method of claim 14, wherein the constraints are stored in a business database.

17. The method of claim 1, wherein step presenting (430) comprises to present existing combinations sorted by correlation quantity.

18. The method of claim 1, wherein step presenting (430) comprises to present pre-stored data identified by the existing combination from a business database.

19. The method of claim 18, wherein the pre-stored data in the business database comprises data selected from the group of: costs for existing combinations; manufacturing time; statistical data about customers; statistical data about usage limitations; and previous sales data.

20. The method of claim 1, wherein in step presenting (430), the presentations are displayed by a browser.

21. The method of claim 1 with the further step of updating (440) a property-to-combinations assignment table with a combination that has been designed.

22. The method of claim 1, wherein the elements are components forming combinations being products that are assemblies of components.

23. The method of claim 1, wherein the elements are phases forming combinations being procedures that are sequences of phases.

24. The method of claim 1, wherein executing the steps is initiated upon starting a computer aided design application.

25. A computer system for implementing the method of anyone of claims 1-24.

26. A computer program comprising program code means for performing all the steps of anyone of the claims 1-24 when said program is run on a computer.
